# FASCICULE DE BREVET EUROPEEN

(11) **EP 3 699 460 B1**
(45) Date de publication et mention de la délivrance du brevet: **01.09.2021**
(21) Numéro de dépôt: 20156406.9
(22) Date de dépôt: 10.02.2020
(51) Int. Cl.: F16H 57/04, F16H 57/08, F02C 7/36, F02K 3/06

(54) **SOLAIRE POUR UN RÉDUCTEUR MÉCANIQUE DE TURBOMACHINE D'AÉRONEF**
SOLARELEMENT FÜR EIN MECHANISCHES REDUKTIONSGETRIEBE FÜR LUFTFAHRZEUG-TURBOTRIEBWERK
SOLAR TECHNOLOGY FOR A MECHANICAL GEAR OF AN AIRCRAFT TURBINE ENGINE

(30) Priorité: 20.02.2019 FR 1901716
(43) Date de publication de la demande: 26.08.2020
(73) Titulaire: Safran Transmission Systems, 92700 Colombes (FR)
(72) Inventeur: SIMON, Adrien, Louis, 77550 MOISSY-CRAMAYEL (FR); DI GIOVANNI, Jean-Charles, Michel, Pierre, 77550 MOISSY-CRAMAYEL (FR)
(74) Mandataire: Gevers & Orès

(56) Documents cités:
- EP-A1- 0 752 077
- EP-A1- 1 783 344
- US-A- 6 007 448
- US-A1- 2016 003 090

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1 -2 987 416, FR-A1-3 041 054, EP-A1 - 0752077, EP-A1 -1783344, USA1-2016/003090 et US-A-6007448.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».

Sur un réducteur planétaire, le porte-satellites est fixe et la couronne constitue l'arbre de sortie du dispositif qui tourne dans le sens inverse du solaire.

Sur un réducteur épicycloïdal, la couronne est fixe et le porte-satellites constitue l'arbre de sortie du dispositif qui tourne dans le sens que le solaire.

Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

La présente invention propose un perfectionnement d'un réducteur avec une solution simple, efficace et économique en particulier pour améliorer la circulation et l'évacuation de l'huile dans le solaire de ce réducteur.

### Résumé de l'invention

L'invention concerne un solaire pour un réducteur mécanique de turbomachine, en particulier d'aéronef, le solaire ayant une forme générale annulaire autour d'un axe X et comportant à sa périphérie externe une denture d'engrènement avec des satellites du réducteur, et à sa périphérie interne des premières cannelures d'accouplement avec un arbre d'entrée du réducteur, où solaire a en section axiale un profil étagé et comprend au moins trois tronçons axiaux adjacents parmi lesquels un premier tronçon comportant une première surface cylindrique interne de centrage ayant un diamètre D1, un deuxième tronçon comportant une deuxième surface cylindrique interne de centrage ayant un diamètre D2, et un troisième tronçon s'étendant axialement entre lesdits premier et deuxième tronçons et comportant les premières cannelures de diamètre interne D3 compris entre D1 et D2.

L'invention propose ainsi une solution qui apporte plusieurs avantages en termes de montage, centrage et lubrification du solaire. D'un point de vue du montage, un arbre d'entrée du réducteur peut être engagé dans le solaire par simple translation axiale. Les surfaces cylindriques du solaire sont destinées à coopérer avec des surfaces complémentaires de l'arbre d'entrée pour assurer le centrage du solaire. Les cannelures s'étendent entre les surfaces cylindriques de centrage et peuvent recevoir de l'huile de lubrification en fonctionnement. L'une des surfaces cylindriques a un diamètre interne inférieur à celui des cannelures et peut être situé à la périphérie interne d'une paroi latérale de retenue de l'huile au niveau des cannelures.

Selon l'invention, le solaire comprend à l'une de ses extrémités axiales une gorge annulaire débouchant radialement vers l'intérieur et configurée pour recevoir au moins un jet d'huile.

Selon l'invention, ledit premier tronçon comprend une rangée annulaire de premiers perçages ou de créneaux configurés pour autoriser un passage d'huile, en particulier vers les cannelures.

Selon l'invention, ladite gorge est formée par un rebord annulaire dudit premier tronçon, les premiers perçages étant en communication fluidique avec cette gorge et étant configurés pour alimenter en huile lesdites premières cannelures

Le solaire selon l'invention peut comprendre une ou plusieurs des caractéristiques suivantes, prises isolément les unes des autres, ou en combinaison les unes avec les autres :
- lesdits premiers perçages sont sensiblement parallèles à l'axe X ou sont inclinés par rapport à l'axe X,
- ledit deuxième tronçon comprend une rangée annulaire de seconds perçages configurés pour autoriser un passage d'huile, en particulier pour évacuer l'huile de lubrification des cannelures,
- lesdits seconds perçages sont inclinés par rapport à l'axe X ; les premiers et seconds perçages assurent donc respectivement l'alimentation et l'évacuation de l'huile des cannelures ; l'évacuation de l'huile par les seconds perçages évite une surpression qui risquerait de pousser axialement l'arbre d'entrée dû aux faibles jeux entre les surfaces de centrage,
- le solaire comprend, entre lesdits deuxième et troisième tronçons, une rainure annulaire de montage d'une bague, cette bague ayant un diamètre interne D5 prédéterminée et étant configurée pour maintenir un niveau d'huile prédéterminé au niveau desdites premières cannelures ; cette bague permet d'assurer un niveau prédéterminé d'huile au niveau des cannelures ; cette bague forme ainsi une autre paroi latérale de retenue de l'huile au niveau des cannelures,
- la bague est de préférence élastiquement déformable ou souple,
- ladite troisième portion comporte des surfaces cylindriques internes situées en amont et en aval des premières cannelures.

La présente invention concerne également un réducteur mécanique de turbomachine, en particulier d'aéronef, comportant une cage dans laquelle est monté un solaire tel que décrit ci-dessus, une couronne s'étendant autour du solaire et de la cage, et des satellites disposés dans la cage et engrenés avec le solaire et la couronne, ces satellites étant maintenus par un porte-satellites.

Le réducteur peut comporter en outre un distributeur d'huile de lubrification comportant des pattes (19) de fixation sur la cage.

Avantageusement, les satellites sont séparés les uns des autres par des déflecteurs d'huile solidaires de la cage, au moins un de ces déflecteurs comportant un gicleur d'huile configuré pour projeter un jet d'huile en direction du solaire. De préférence, le jet d'huile est orienté de manière tangentielle dans une gorge annulaire du solaire, le jet d'huile étant orienté dans le sens de rotation du solaire, ce qui permet de limiter les éclaboussures d'huile.

L'invention concerne encore un ensemble comportant un réducteur et un arbre d'entrée, cet arbre d'entrée comportant une portion engagée axialement dans le solaire et comportant à sa périphérie externe des secondes cannelures d'accouplement avec les premières cannelures du solaire, caractérisé en ce que ladite portion a en section axiale un profil étagé et comprend au moins trois segments axiaux adjacents parmi lesquels un premier segment comportant une première surface cylindrique externe de centrage ayant un diamètre D1 et configurée pour coopérer avec ladite première surface cylindrique interne de centrage, un deuxième segment comportant une deuxième surface cylindrique externe de centrage ayant un diamètre D2 et configurée pour coopérer avec ladite deuxième surface cylindrique interne de centrage, et un troisième segment s'étendant axialement entre lesdits premier et deuxième segments et comportant lesdites secondes cannelures de diamètre interne D4 compris entre D1 et D2.

Le troisième segment peut comporter des pré-cannelures situées en amont des secondes cannelures.

L'invention concerne en outre une turbomachine, en particulier d'aéronef, comportant un réducteur mécanique ou un ensemble tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique partielle en coupe axiale d'un réducteur mécanique,
[Fig. 3] la figure 3 est une vue en coupe d'un réducteur mécanique,
[Fig. 4] la figure 4 est une vue en perspective d'un des déflecteurs d'huile du réducteur de la figure 3,
[Fig. 5] la figure 5 est une vue en coupe d'un mode de réalisation de la présente invention et montre l'accouplement entre un solaire et un arbre d'entrée du réducteur,
[Fig. 5a] la figure 5a est une vue à plus grande échelle d'une partie de la figure 5,
[Fig. 6] la figure 6 est une vue similaire à celle de la figure 5 et montrant le cheminement de l'huile dans le réducteur en fonctionnement, et
[Fig. 7] la figure 7 est une vue isométrique de l'amont du réducteur de la figure 5.

### Description détaillée de l'invention

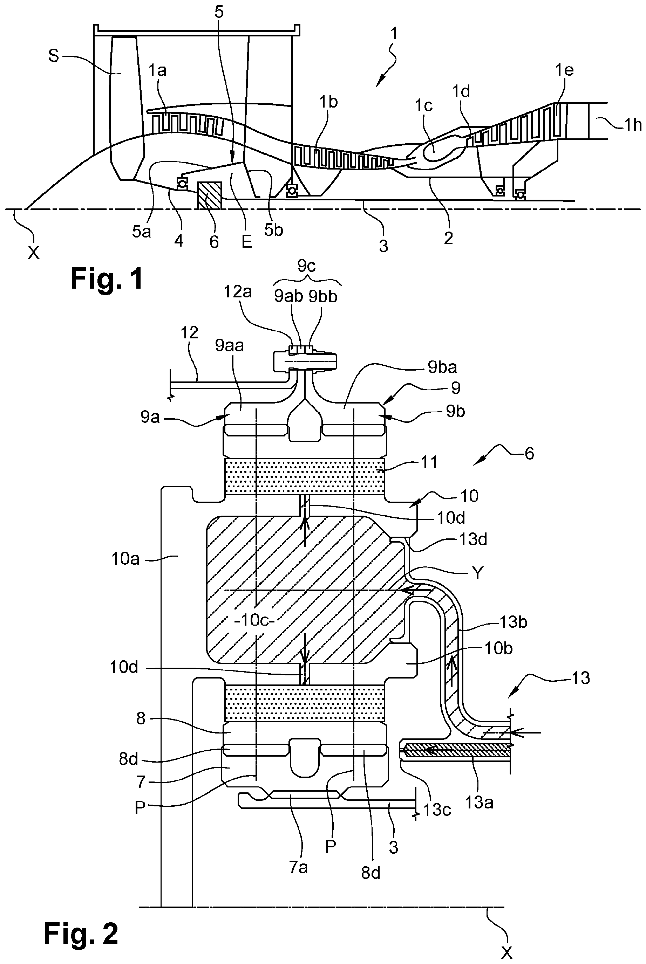

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application. L'ensemble des satellites 8 est maintenus par un châssis appelé porte-satellites 10. Chaque satellite 8 tourne autour de son propre axe Y, et engrène avec la couronne 9.

En sortie nous avons :
- dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
- dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
- une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
- une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices avant et sur un autre plan médian P pour les hélices arrière. Dans les autres figures, dans le cas d'un roulement à deux rangées de rouleaux, chaque rangée d'éléments roulants est aussi centrée sur deux plans médians.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

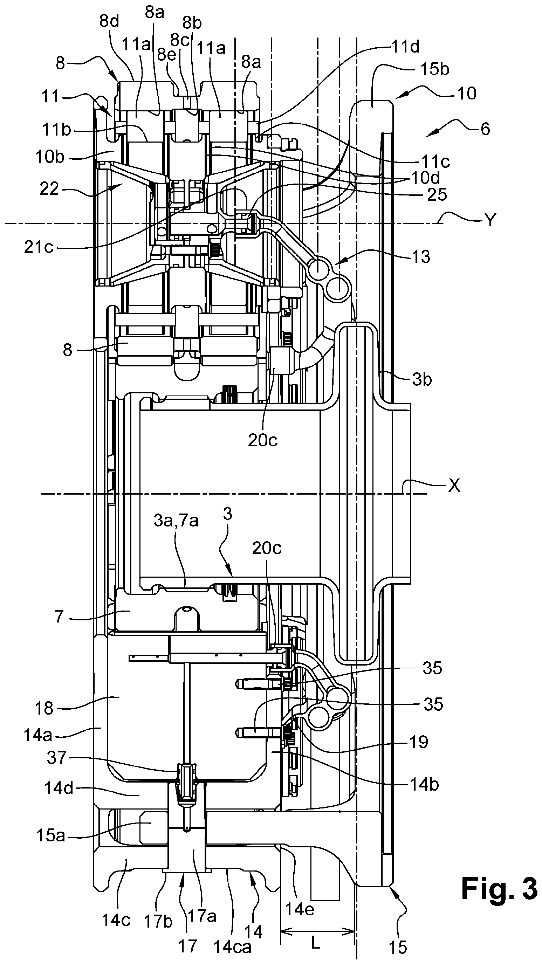

La figure 3 représente un exemple plus détaillé d'un réducteur 6.

Le porte-satellites 10 du réducteur 6 de la figure 3 est du type à cage 14 et porte-cage 15, la cage 14 et le porte-cage 15 étant reliés par paliers.

La cage 14 comprend deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par des couples de pontets 14c, 14d, régulièrement répartis autour de l'axe X. Ces couples de pontets assurent une liaison structurelle entre les parois 14a, 14b. Chaque couple de pontets comprend deux pontets, respectivement radialement externe 14c et radialement interne 14d, qui s'étendent sensiblement parallèlement le long de l'axe X à distance radiale l'un de l'autre.

Les couples de pontets 14c, 14d définissent entre eux des lumières qui s'étendent circonférentiellement autour de l'axe X et sont délimitées axialement par les bords périphériques externes des parois 14a, 14b. Les couples de pontets sont au nombre de 5 dans l'exemple représenté.

Chaque couple de pontets forme une chape pour accueillir un doigt 15a du porte-cage 15. Autrement dit, les pontets de chaque couple définissent entre eux un logement de réception d'un doigt 15a du porte-cage 15. Des ouvertures 14e de forme oblongue sont réalisées dans la paroi arrière 14b de telle sorte à laisser passer les doigts 15a entre les pontets 14c, 14d. La paroi 14a peut comporter des ouvertures similaires alignées axialement avec les ouvertures 14e de la paroi 14b.

Le nombre de doigts 15a est égal au nombre de couples de pontets 14c, 14d et est de 5 dans l'exemple représenté. Ces doigts 15a s'étendent en saillie axialement vers l'amont depuis un anneau 15b du porte-cage 15 s'étendant autour de l'axe X. Les doigts 15a du porte-cage 15 sont engagés dans les logements inter-pontets par translation axiale depuis l'arrière, à travers les ouvertures 14e de la paroi 14b.

Chaque doigt 15a comprend, sensiblement en son milieu, un évidement de montage d'une rotule (non représentée) destinée à être traversée par une broche cylindrique 17 portée par chaque couple de pontets 14c, 14d. Chaque broche 17 traverse le logement inter-pontets et a une orientation sensiblement radiale par rapport à l'axe X. Chaque broche 17 comporte un corps cylindrique 17a relié à une extrémité, ici radialement externe, à une collerette 17b. La broche 17 est ici engagée par translation radiale depuis l'extérieur à travers des orifices radiaux des pontets 14c, 14d, sa collerette 17b étant destinée à venir en appui radial sur une face plane 14ca du pontet externe 14c. Après insertion de la broche 17 dans les orifices des pontets, jusqu'à mise en appui de la collerette 17b sur le pontet externe, la collerette 17b est fixée à ce pontet par exemple par vissage.

Comme on le voit dans les dessins, en position assemblée, l'anneau 15b du porte-cage 15 est écarté axialement d'une distance L prédéterminée de la paroi arrière 14b en regard de la cage 14 (figure 3).

La cage 14 définit un logement interne de réception du solaire 7 d'axe X, des satellites 8 disposés autour du solaire 7 et engrenés avec lui, ainsi que de déflecteurs 18.

Comme décrit dans ce qui précède en relation avec la figure 2, le solaire 7 comprend des cannelures internes 7a d'accouplement à des cannelures externes 3a complémentaires de l'arbre BP 3 (figure 3). On peut constater que les cannelures 3a sont situées sur une portion amont de l'arbre BP 3 qui comprend une portion aval 3b en forme de soufflet. Cette portion 3b est ici située dans un plan perpendiculaire à l'axe X qui est écarté axialement de la cage 14 du porte-satellites 10 et qui passe sensiblement par l'anneau 15b du porte-cage 15. Cette portion 3b confère à l'arbre BP 3 une certaine souplesse limitant la transmission des efforts du moteur en fonctionnement.

Le réducteur 6 comprend un distributeur 13 d'huile de lubrification. Le distributeur 13 a une forme générale annulaire autour de l'axe X et est formé d'une seule pièce. Il est ici rapporté et fixé sur le porte-satellites 10 et comprend pour cela des pattes 19 de fixation sur la cage 14 du porte-satellites et en particulier sur sa paroi arrière 14b.

Le distributeur 13 comprend des sorties d'huile 20c qui sont raccordées aux déflecteurs 18 en vue de leur alimentation en huile.

Le distributeur 13 comprend en outre des sorties d'huile 21c qui sont raccordées à des noyaux 22 de lubrification et de refroidissement.

Les noyaux 22 ont pour fonction de lubrifier et de refroidir les axes 10b des satellites 8 qui sont ici centrés et guidés par les paliers 11 à rouleaux 11a.

Chaque axe 10b est guidé par un palier 11 à double roulement, ici à double rangée de rouleaux 11a. Les deux rangées s'étendent autour d'un même axe qui est confondu avec celui, noté Y, de l'axe 10b du satellite 8.

Classiquement, les rouleaux 11a sont guidés dans des pistes définies par des bagues interne et externe. Dans les exemples représentés, une particularité est liée au fait que les bagues internes de guidage des rouleaux 11a sont intégrées à l'axe 10b. La périphérie externe de l'axe 10b comprend ainsi des pistes cylindriques 11b de roulement des rouleaux 11a, chaque piste 11b étant délimitée axialement par des nervures annulaires 11c qui servent elles au guidage de cages 11d de maintien des rouleaux 11a. Par ailleurs, la figure 3 permet de voir que les bagues externes sont intégrées à la périphérie interne des satellites 8. La périphérie interne des satellites 8 comprend ainsi des pistes cylindriques 8a de roulement des rouleaux 11a, les pistes 8a étant séparées l'une de l'autre par une rainure annulaire 8b débouchant radialement vers l'intérieur et au fond de laquelle sont formées des perçages radiaux 8c de passage d'huile.

La périphérie externe de chaque satellite 8 comprend une denture 8d à double hélice, c'est-à-dire deux hélices coaxiales et adjacentes qui sont ici séparées l'une de l'autre par une rainure annulaire 8e débouchant radialement vers l'extérieur et au fond de laquelle débouchent les perçages 8c.

La périphérie interne de l'axe 10b de chaque satellite 8 a une forme générale biconique et comprend une bride annulaire de fixation d'un noyau de lubrification 22.

Des orifices 10d de passage d'huile traversent les axes 10b en direction radiale, et s'étendent donc entre leurs périphéries interne et externe.

Le noyau 22 comprend une tubulure de raccordement 25 centrée sur l'axe Y et formant un raccord mâle destiné à recevoir par emmanchement un raccord femelle d'une sortie 21c du distributeur 13. En variante, la tubulure 25 pourrait former un raccord femelle.

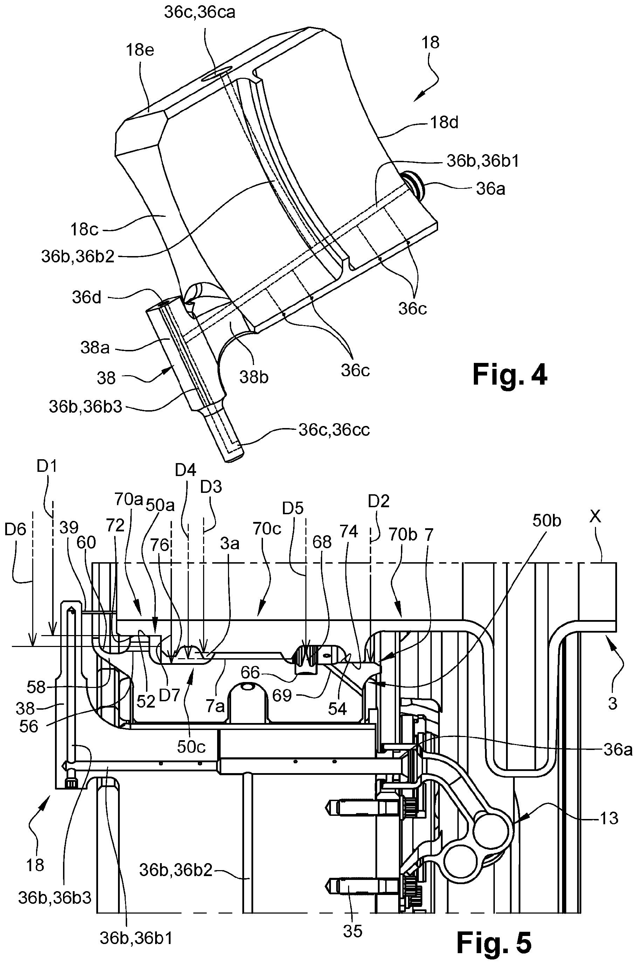

Les figures 3 et 4 montrent des déflecteurs 18 du réducteur 6. Comme évoqué dans ce qui précède, le réducteur 6 comprend plusieurs déflecteurs 18 qui sont logés dans la cage 14 et sont chacun disposés entre deux satellites 8 adjacents. Le nombre de déflecteurs 18 du réducteur 6 est donc égal au nombre de satellites 8 de ce réducteur.

La première fonction d'un déflecteur 18 est de guider l'huile de lubrification des dentures des satellites 8 et d'éviter la recirculation d'huile entre satellites, d'où la notion de « déflecteur inter-satellites ». Les déflecteurs 18 sont ainsi conformés pour épouser la forme périphérique des satellites 8.

En plus de s'étendre entre deux satellites 8 adjacents, chaque déflecteur 18 est situé entre le solaire 7 d'une part, situé radialement à l'intérieur, et un couple de pontets 14c, 14d, d'autre part, situé radialement à l'extérieur (figure 3).

Les déflecteurs 18 s'étendent entre les parois radiales 14a, 14b de la cage 14 et ont des faces 18c, 18d qui sont en appui sur les faces internes en regard de ces parois 14a, 14b. Les déflecteurs 18 sont fixés à la cage 14 par des vis 35 par exemple. Chaque bloc peut comporter, par exemple sur sa face arrière 18d, des trous taraudés de réception de vis 35 de fixation du déflecteur à la paroi arrière 14b de la cage 14. Une configuration identique sur la paroi 14a est aussi possible.

Chaque déflecteur 18 comprend un circuit de lubrification intégré, qui comprend une entrée d'huile 36a reliée par des perçages 36b à au moins une sortie d'huile 36c. Dans l'exemple représenté, l'entrée d'huile 36a est située sur la face arrière 18d et comprend une tubulure destinée à former un raccord mâle et à coopérer par emmanchement mâle-femelle avec une sortie 20c du distributeur 13 décrit dans ce qui précède. Même si un raccord est présenté dans ce qui suit comme mâle et destiné à coopérer avec un raccord femelle, il peut en variante être remplacé par un raccord femelle destiné donc à coopérer avec un raccord mâle, et inversement (figure 3).

Chaque déflecteur 18 comprend au moins une sortie 36c qui se présente sous la forme d'un orifice 36ca formant un raccord femelle qui est destiné à recevoir une douille 37 de raccordement fluidique étanche (figure 3). Comme l'entrée 36a, la douille 37 peut être supprimée et remplacée par un raccord mâle. Cet orifice 36ca est ici situé sur une face supérieure 18e de chaque déflecteur. La figure 3 permet de voir qu'une moitié de la douille 37 est engagée par emmanchement mâle-femelle dans l'orifice 36ca et que l'autre moitié est engagée par emmanchement mâle-femelle dans un orifice femelle prévu à l'extrémité radialement interne du corps 17a de la broche 17 portée par un couple de pontets 14c, 14d. Cette même figure montre que l'entrée 36a est reliée par deux perçages 36b1, 36b2 à la sortie 36c. Ces perçages sont perpendiculaires, un premier 36b1 s'étendant suivant l'axe X, depuis l'entrée 36a, et un second 36b2 s'étendant radialement depuis le premier perçage jusqu'à l'orifice 36ca.

L'un des déflecteurs 18 comprend un gicleur 38 destiné à projeter de l'huile vers le solaire 7. Ce déflecteur 18 est celui représenté à la figure 4. Le gicleur 38 est formé d'une seule pièce avec le bloc du déflecteur 18 et a ici une forme générale en L dont une branche 38a a une orientation radiale et dont une branche 38b s'étend axialement et relie la face avant 18c du bloc à l'extrémité radialement externe de la branche 38a. Le gicleur 38 s'étend dans un plan médian de symétrie du bloc. Les déflecteurs 18 qui ne comportent pas de gicleur 38 présentent également un plan médian de symétrie, qui correspond à un plan passant par l'axe X du réducteur 6.

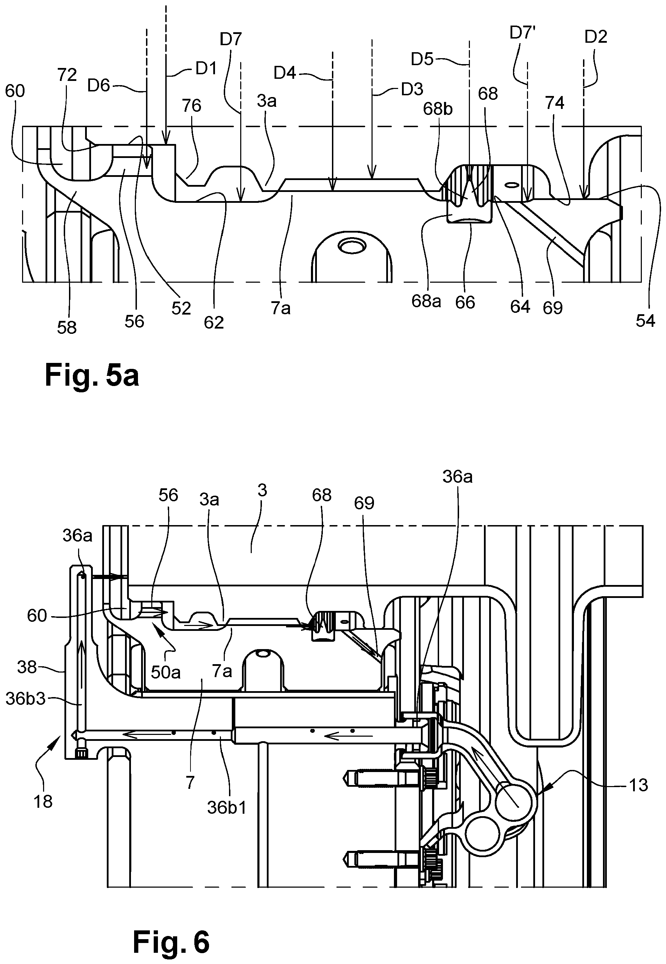

La branche 38a s'étend radialement vers l'intérieur depuis la branche 38b et son extrémité libre radialement interne comprend un orifice 36cc orienté vers l'arrière pour la projection d'huile sur le solaire 7. Les figures 5, 6 et 7 montrent le jet d'huile 39 projeté par ce gicleur 38.

L'alimentation en huile du gicleur 38 est réalisé en prolongeant le perçage axial 36b1 jusqu'à la face avant 18c du bloc du déflecteur 18, et dans la branche axiale 38b (figure 4). Un perçage radial 36b3 additionnel est réalisé dans la branche 38 pour relier ce perçage axial 36b à l'orifice 36cc de projection d'huile du gicleur. L'extrémité radialement externe du perçage 36b3 du gicleur, qui est donc opposée à l'orifice 36cc de projection d'huile, peut être fermée par un bouchon 36d rapporté. Comme on le voit à la figure 3, les déflecteurs 18 qui ne comportent pas de gicleur 38 ont un perçage axial 36b plus court, c'est-à-dire non débouchant sur la face avant 18c du bloc du déflecteur.

Selon l'invention, le solaire 7 et l'arbre BP 3 sont du type étagé et sont conçus pour améliorer la lubrification de leurs cannelures 7a, 3a en fonctionnement.

Les figures 5 et suivantes montrent un mode de réalisation préféré du solaire 7 et de l'arbre BP 3.

Le solaire 7 a une périphérie externe comme décrit dans ce qui précède. Sa périphérie interne a en section axiale un profil étagé et comprend au moins trois tronçons axiaux 50a, 50b, 50c adjacents parmi lesquels un premier tronçon 50a comportant une première surface cylindrique interne 52 de centrage ayant un diamètre D1, un deuxième tronçon 50b comportant une deuxième surface cylindrique interne 54 de centrage ayant un diamètre D2, et un troisième tronçon 50c s'étendant axialement entre les premier et deuxième tronçons 50a, 50b et comportant les cannelures 7a de diamètre interne D3 compris entre D1 et D2.

La surface 52 est située à la périphérie interne d'une paroi radiale du tronçon 50a, cette paroi radiale comportant une rangée annulaire de premiers perçages 56. Ces perçages 56 sont situés à une circonférence de diamètre D6. Les perçages 56 sont sensiblement parallèles à l'axe X dans l'exemple représenté. En variante, les perçages pourraient être inclinés par rapport à l'axe X, par exemple jusqu'à 30° voire 60°. Du fait des forces centrifuges, l'huile s'écoule de la gorge 60 à travers les perçages 56 vers la gorge 62 de diamètre D7. C'est donc plus particulièrement le diamètre externe des perçages qui peut avoir une influence sur l'écoulement de l'huile en fonctionnement. Par analogie, dans le cas où les perçages seraient remplacés par des créneaux (et donc par une alternance de parties pleines et d'évidements), ce serait bien le diamètre externe des évidements des créneaux qui impacteraient l'écoulement de l'huile à travers les créneaux. Le premier tronçon 50a comprend en outre à son extrémité amont ou avant un rebord annulaire 58 ayant en section une forme générale en U dont l'ouverture est orientée radialement vers l'intérieur et définit une gorge annulaire 60 radialement interne. Le rebord 58 et sa gorge 60 forment un rouet de récupération de l'huile projetée par le gicleur 38. Les perçages 56 débouchent à leurs extrémités amont au fond de la gorge 60 et à leurs extrémités aval au niveau du troisième tronçon 50c. Les perçages 56 assurent ainsi la circulation de l'huile depuis la gorge 60 jusqu'aux cannelures 7a.

Les cannelures 7a s'étendent sur une partie de la longueur ou dimension axiale du troisième tronçon 50c qui comprend des surfaces cylindriques internes 62, 64 en amont et en aval des cannelures (figure 5a).

La surface 62a un diamètre D7. La surface 64 a un diamètre D7' qui est de préférence supérieur à D7, par exemple de 1 ou 2mm. Les diamètres D7 et D7' sont supérieurs au diamètre D2 de la surface 54. La surface 64 comprend une rainure annulaire 66 de logement d'une bague 68 de trop plein. Cette bague 68 a un diamètre interne D5 prédéterminée et est configurée pour maintenir un niveau d'huile prédéterminé au niveau des cannelures 7a.

Dans l'exemple représenté, la bague 68 a en section axiale une forme générale en T et comprend une branche sensiblement cylindrique 68a logée dans la rainure 66 et une branche sensiblement radiale 68b s'étendent depuis la branche 68a radialement vers l'intérieur et dont la périphérie interne définit le diamètre D5.

Le deuxième tronçon 50b comprend une rangée annulaire de perçages 69 configurés pour autoriser un passage d'huile de l'amont vers l'aval. Les perçages 69 sont inclinés par rapport à l'axe X, de l'amont vers l'aval radialement vers l'extérieur. Ils débouchent à leurs extrémités amont sur la surface 64, c'est-à-dire en amont de la surface 54, et à leurs extrémités aval sur une surface radiale aval du solaire.

La portion amont de l'arbre BP 3 qui est engagée axialement dans le solaire 7 a également en section axiale un profil étagé et comprend au moins trois segments axiaux 70a, 70b, 70c adjacents parmi lesquels un premier segment 70a comportant une surface cylindrique externe 72 de centrage ayant un diamètre D1 et configurée pour coopérer avec la surface cylindrique interne 52, un deuxième segment 70b comportant une deuxième surface cylindrique externe 74 de centrage ayant un diamètre D2 et configurée pour coopérer avec la surface cylindrique interne 54, et un troisième segment 70c s'étendant axialement entre lesdits premier et deuxième segments 70a, 70b et comportant les cannelures 3a qui ont un diamètre externe D4 compris entre D1 et D2.

Dans l'exemple représenté, des pré-cannelures 76 sont situées sur le segment 70c en amont des cannelures 3a. Ces pré-cannelures 76 ont une fonction de centrage et d'orientation angulaire du solaire 7 et de l'arbre 3 lors de leur engagement respectif par translation axiale. Lors de cette insertion, les pré-cannelures 76 coopèrent avec les extrémités aval des cannelures 7a du solaire pour centrer et orienter angulairement le solaire vis-à-vis de l'arbre, puis ces derniers sont engagés l'un dans l'autre par translation axiale. En position montée et accouplée, les cannelures 3a, 7a sont engagées les unes dans les autres. Les pré-cannelures 76 n'ont pas vocation à transmettre un couple de rotation et sont donc situées en amont de la zone d'accouplement du solaire 7 et de l'arbre 3.

Dans l'exemple représenté, D1 est inférieur à D2, et D3 est compris entre D1 et D2. D4 est compris entre D1 et D2, et est supérieur à D3. D5 est compris entre D1 et D2 et est ici en outre compris entre D3 et D4. D6 est compris entre D1 et D2 et est inférieur à D3. D7 et D7' sont supérieurs au diamètre de pied des cannelures 7a du solaire.

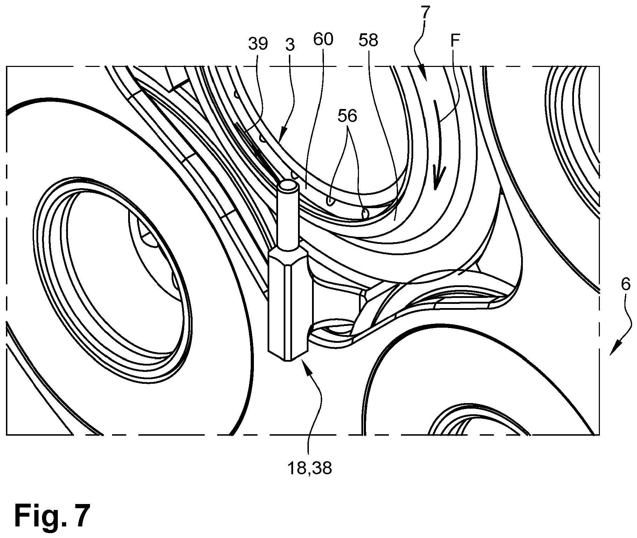

Les figures 6 et 7 montrent le cheminement de l'huile depuis le distributeur 13 jusqu'au solaire 7. L'huile pénètre dans le distributeur 13 comme indiqué dans ce qui précède puis alimente le déflecteur 18 par l'entrée 36a. L'huile circule dans les perçages 36b1, 36b3 et jusqu'à l'orifice 36cc. Un jet d'huile 39 est projeté vers le solaire 7, directement dans sa gorge 60. Le jet est avantageusement orienté et positionné de façon à limiter les éclaboussures. Il est de préférence orienté dans le sens de rotation (flèche F à la figure 7) du solaire 7 et sensiblement tangent à la gorge 60. L'huile qui est projetée dans la gorge 60 est centrifugée puis s'écoule à travers les perçages 56 au niveau des cannelures 3a, 7a pour les lubrifier. Un niveau prédéterminé d'huile est retenu à l'amont par la paroi radiale du premier tronçon 50a, et à l'aval par la bague 68. Le surplus d'huile s'écoule radialement à l'intérieur de la bague vers l'aval et rejoint les perçages 69 pour être ensuite évacuée vers l'aval du solaire.

## Revendications

1. Solaire (7) pour un réducteur mécanique (6) de turbomachine d'aéronef, le solaire ayant une forme générale annulaire autour d'un axe (X) et comportant à sa périphérie externe une denture d'engrènement avec des satellites (8) du réducteur, et à sa périphérie interne des premières cannelures (7a) d'accouplement avec un arbre d'entrée (3) du réducteur, le solaire ayant en section axiale un profil étagé et comportant au moins trois tronçons axiaux (50a, 50b, 50c) adjacents parmi lesquels un premier tronçon (50a) comportant une première surface cylindrique interne (52) de centrage ayant un diamètre D1, un deuxième tronçon (50b) comportant une deuxième surface cylindrique interne (54) de centrage ayant un diamètre D2, et un troisième tronçon (50c) s'étendant axialement entre lesdits premier et deuxième tronçons et comportant les premières cannelures (7a) de diamètre interne D3 compris entre D1 et D2, **caractérisé en ce que** le solaire (7)
comprend à l'une de ses extrémités axiales une gorge annulaire (60) débouchant radialement vers l'intérieur et configurée pour recevoir au moins un jet d'huile (39),
ledit premier tronçon (50a) comprend une rangée annulaire de perçages (56) ou de créneaux configurés pour autoriser un passage d'huile,
ladite gorge (60) est formée par un rebord annulaire dudit premier tronçon (50a), les perçages (56) étant en communication fluidique avec cette gorge et étant configurés pour alimenter en huile lesdites premières cannelures (7a).

2. Solaire (7) selon la revendication précédente, dans lequel lesdits premiers perçages (56) sont sensiblement parallèles à l'axe X ou sont inclinés par rapport à l'axe X.

3. Solaire (7) selon l'une des revendications précédentes, dans lequel ledit deuxième tronçon (50b) comprend une rangée annulaire de seconds perçages (69) configurés pour autoriser un passage d'huile.

4. Solaire (7) selon la revendication précédente, dans lequel lesdits seconds perçages (69) sont inclinés par rapport à l'axe X.

5. Solaire (7) selon l'une des revendications précédentes, dans lequel il comprend, entre lesdits deuxième et troisième tronçons (50a, 50b), une rainure annulaire (66) de montage d'une bague (68), cette bague ayant un diamètre interne D5 prédéterminée et étant configurée pour maintenir un niveau d'huile prédéterminé au niveau desdites premières cannelures (7a).

6. Solaire (7) selon la revendication précédente, dans lequel la bague (68) est élastiquement déformable ou souple.

7. Solaire (7) selon l'une des revendications 1 à 6, dans lequel ladite troisième portion (50c) comporte des surfaces cylindriques internes (62, 64) situées en amont et en aval des premières cannelures (7a).

8. Réducteur mécanique (6) de turbomachine (1), en particulier d'aéronef, comportant une cage (14) dans laquelle est monté un solaire (7) selon l'une des revendications précédentes, une couronne (9) s'étendant autour du solaire et de la cage, et des satellites (8) disposés dans la cage et engrenés avec le solaire et la couronne, ces satellites étant maintenus par un porte-satellites (10).

9. Réducteur (6) selon la revendication précédente, dans lequel le réducteur comporte en outre un distributeur (13) d'huile de lubrification, ledit distributeur (13) comporte des pattes (19) de fixation sur la cage (14).

10. Réducteur (6) selon la revendication 8 ou 9, dans lequel les satellites (8) sont séparés les uns des autres par des déflecteurs d'huile (18) solidaires de la cage (14), au moins un de ces déflecteurs comportant un gicleur d'huile (38) configuré pour projeter un jet d'huile (39) en direction du solaire (7), et de préférence de manière tangentielle dans une gorge annulaire (60) du solaire, le jet d'huile étant orienté dans le sens de rotation du solaire.

11. Ensemble comportant un réducteur (6) selon une des revendications 8 à 10 et un arbre d'entrée (3), cet arbre d'entrée comportant une portion engagée axialement dans le solaire (7) et comportant à sa périphérie externe des secondes cannelures (3a) d'accouplement avec les premières cannelures (7a) du solaire, **caractérisé en ce que** ladite portion a en section axiale un profil étagé et comprend au moins trois segments axiaux (70a, 70b, 70c) adjacents parmi lesquels un premier segment (70a) comportant une première surface cylindrique externe (72) de centrage ayant le diamètre D1 et configurée pour coopérer avec ladite première surface cylindrique interne (52) de centrage, un deuxième segment (70b) comportant une deuxième surface cylindrique externe (74) de centrage ayant le diamètre D2 et configurée pour coopérer avec ladite deuxième surface cylindrique interne (54) de centrage, et un troisième segment (70c) s'étendant axialement entre lesdits premier et deuxième segments et comportant lesdites secondes cannelures (3a) de diamètre interne D4 compris entre D1 et D2.

12. Ensemble selon la revendication précédente, dans lequel ledit troisième segment (70c) comporte des pré-cannelures (76) situées en amont des secondes cannelures (3a).

13. Turbomachine (1) d'aéronef comportant un réducteur mécanique (6) selon une des revendications 8 à 10 ou un ensemble selon la revendication 11 ou 12.

## Patentansprüche

1. Sonnenrad (7) für ein mechanisches Reduktionsgetriebe (6) für Luftfahrzeug-Turbomaschine, wobei das Sonnenrad eine allgemeine Ringform um eine Achse (X) aufweist und an seinem Außenumfang eine Verzahnung zum Eingreifen mit Planeten (8) des Reduktionsgetriebes, und an seinem Innenumfang erste Kerbverzahnungen (7a) zum Koppeln mit einer Eingangswelle (3) des Reduktionsgetriebes umfasst, wobei das Sonnenrad im axialen Schnitt ein abgestuftes Profil aufweist und mindestens drei aneinandergrenzende axiale Abschnitte (50a, 50b, 50c) umfasst, unter welchen ein erster Abschnitt (50a) eine erste zylindrische Innenoberfläche (52) zum Zentrieren umfasst, die einen Durchmesser D1 aufweist, einen zweiten Abschnitt (50b), der eine zweite zylindrische Innenoberfläche (54) zum Zentrieren umfasst, die einen Durchmesser D2 aufweist, und einen dritten Abschnitt (50c), der sich axial zwischen dem ersten und dem zweiten Abschnitt erstreckt und die ersten Kerbverzahnungen (7a) mit Innendurchmesser D3, der zwischen D1 und D2 enthalten ist, umfasst, **dadurch gekennzeichnet, dass** das Sonnenrad (7)
an einem seiner axialen Enden eine ringförmige Hohlkehle (60) umfasst, die radial nach innen mündet und dazu konfiguriert ist, mindestens einen Ölstrahl (39) zu empfangen,
der erste Abschnitt (50a) eine ringförmige Reihe von Bohrungen (56) oder Zinnen umfasst, die dazu konfiguriert sind, ein Durchströmen von Öl zu gestatten,
wobei die Hohlkehle (60) durch einen ringförmigen Rand des ersten Abschnitts (50a) gebildet ist, die Bohrungen (56) mit dieser Hohlkehle in Fluidverbindung stehen und dazu konfiguriert sind, die ersten Kerbverzahnungen (7a) mit Öl zu versorgen.

2. Sonnenrad (7) nach dem vorstehenden Anspruch, wobei die ersten Bohrungen (56) im Wesentlichen zu der X-Achse parallel oder in Bezug auf die X-Achse geneigt sind.

3. Sonnenrad (7) nach einem der vorstehenden Ansprüche, wobei der zweite Abschnitt (50b) eine ringförmige Reihe zweiter Bohrungen (69) umfasst, die dazu konfiguriert sind, ein Durchströmen von Öl zu gestatten.

4. Sonnenrad (7) nach dem vorstehenden Anspruch, wobei die zweiten Bohrungen (69) in Bezug auf die X-Achse geneigt sind.

5. Sonnenrad (7) nach einem der vorstehenden Ansprüche, wobei es zwischen dem zweiten und dem dritten Abschnitt (50a, 50b) eine ringförmige Nut (66) zur Montage eines Rings (68) umfasst, wobei dieser Ring einen vorbestimmten Innendurchmesser D5 aufweist und dazu konfiguriert ist, einen vorbestimmten Ölpegel in dem Bereich der ersten Kerbverzahnungen (7a) aufrecht zu erhalten.

6. Sonnenrad (7) nach dem vorstehenden Anspruch, wobei der Ring (68) elastisch verformbar oder biegsam ist.

7. Sonnenrad (7) nach einem der Ansprüche 1 bis 6, wobei der dritte Abschnitt (50c) zylindrische Innenoberflächen (62, 64) umfasst, die stromaufwärts und stromabwärts der ersten Kerbverzahnungen (7a) liegen.

8. Mechanisches Reduktionsgetriebe für Turbomaschine, insbesondere für Luftfahrzeug, das einen Käfig (14) umfasst, in dem ein Sonnenrad (7) nach einem der vorstehenden Ansprüche montiert ist, einen Kranz (9), der sich um das Sonnenrad und den Käfig erstreckt, und Planeten (8), die in dem Käfig angeordnet sind und in das Sonnenrad und den Kranz eingreifen, wobei diese Planeten von einem Planetenträger (10) gehalten werden.

9. Reduktionsgetriebe (6) nach dem vorstehenden Anspruch, wobei das Reduktionsgetriebe weiter einen Verteiler (13) von Schmieröl umfasst, wobei der Verteiler (13) Pratzen (19) zum Befestigen auf dem Käfig (14) umfasst.

10. Reduktionsgetriebe (6) nach Anspruch 8 oder 9, wobei die Planeten (8) durch Ölabweiser (18), die fest mit dem Käfig (14) verbunden sind, voneinander getrennt sind, wobei mindestens einer dieser Abweiser eine Öleinspritzdüse (38) umfasst, die dazu konfiguriert ist, einen Ölstrahl (39) in Richtung des Sonnenrads (7), und vorzugsweise tangential in eine ringförmige Hohlkehle (60) des Sonnenrads zu werfen, wobei der Ölstrahl in die Drehrichtung des Sonnenrads ausgerichtet ist.

11. Baugruppe, die ein Reduktionsgetriebe (6) nach einem der Ansprüche 8 bis 10 und eine Eingangswelle (3) umfasst, wobei diese Eingangswelle einen Abschnitt umfasst, der axial in das Sonnenrad (7) eingreift und an seinem Außenumfang zweite Kerbverzahnungen (3a) zum Koppeln mit den ersten Kerbverzahnungen (7a) des Sonnenrads umfasst, **dadurch gekennzeichnet, dass** der Abschnitt im axialen Schnitt ein abgestuftes Profil aufweist und mindestens drei aneinandergrenzende axiale Segmente (70a, 70b, 70c) umfasst, unter welchen ein erstes Segment (70a) eine erste zylindrische Außenoberfläche (72) zum Zentrieren umfasst, die einen Durchmesser D1 aufweist und dazu konfiguriert ist, mit der ersten zylindrischen Innenoberfläche (52) zum Zentrieren zusammenzuwirken, ein zweites Segment (70b) eine zweite zylindrische Außenoberfläche (74) zum Zentrieren umfasst, die einen Durchmesser D2 aufweist und dazu konfiguriert ist, mit der zweiten zylindrischen Innenoberfläche (54) zum Zentrieren zusammenzuwirken, und ein drittes Segment (70c), das sich axial zwischen dem ersten und dem zweiten Segment erstreckt und die zweiten Kerbverzahnungen (3a) mit Innendurchmesser D4, der zwischen D1 und D2 liegt, umfasst.

12. Baugruppe nach dem vorstehenden Anspruch, wobei das dritte Segment (70c) Vor-Kerbverzahnungen (76), die stromaufwärts der zweiten Kerbverzahnungen (3a) liegen, umfasst.

13. Turbomaschine (1) für Luftfahrzeug, das ein mechanisches Reduktionsgetriebe (6) nach einem der Ansprüche 8 bis 10 oder eine Baugruppe nach Anspruch 11 oder 12 umfasst.

## Claims

1. Sun gear (7) for a mechanical reduction gear (6) of an aircraft turbine engine, the sun gear having a general annular shape around an axis (X), and comprising at the outer periphery thereof, a gearing meshing with planet gears (8) of the reduction gear, and at the inner periphery thereof, first coupling splines (7a) of with an input shaft (3) of the reduction gear, the sun gear having a staged profile in axial cross-section, and comprising at least three adjacent axial sections (50a, 50b, 50c) among which a first section (50a) comprising a first inner centring cylindrical surface (52) having a diameter D1, a second section (50b) comprising a second inner centring cylindrical surface (54) having a diameter D2, and a third section (50c) extending axially between said first and second section and comprising the first splines (7a) with an inner diameter D3 between D1 and D2, **characterised in that** the sun gear (7) comprises at one of its axial ends an annular recess (60) opening radially inwards and configured to receive at least one oil jet (39), said first section (50a) comprises an annular row of first bores (56) or notches configured to enable a flow of oil,
said recess (60) is formed by an annular edge of said first section (50a), the first bores (56) being in fluid communication with this recess and being configured to supply said first splines (7a) with oil.

2. Sun gear (7) according to the preceding claim, wherein said first bores (56) are substantially parallel with the axis X or are inclined with respect to the axis X.

3. Sun gear (7) according to one of the preceding claims, wherein said second section (50b) comprises an annular row of second bores (69) configured to enable a flow of oil.

4. Sun gear (7) according to the preceding claim, wherein said second bores (69) are inclined with respect to the axis X.

5. Sun gear (7) according to one of the preceding claims, wherein it comprises, between said second and third sections (50a, 50b), an annular mounting groove (66) of a ring (68), this ring having a predetermined inner diameter D5 and being configured to maintain a predetermined oil level at the level of said first splines (7a).

6. Sun gear (7) according to the preceding claim, wherein the ring (68) is elastically deformable or flexible.

7. Sun gear (7) according to one of the claims 1 to 6, wherein said third portion (50c) comprises inner cylindrical surfaces (62, 64) situated upstream and downstream from the first splines (7a).

8. Mechanical reduction gear (6) for a turbine engine, in particular of an aircraft, comprising a cage (14) wherein is mounted a sun gear (7) according to one of the preceding claims, a ring gear (9) extending around the sun gear and the cage, and planet gears (8) arranged in the cage and meshed with the sun gear and the ring gear, these planet gears being supported by a planet carrier (10).

9. Reduction gear (6) according to the preceding claim, wherein the reduction gear further comprises a lubrication oil dispenser (13), said dispenser (13) comprises lugs (19) for fixing on the cage (14).

10. Reduction gear (6) according to the claim 8 or 9, wherein the planet gears (8) are separated from one another by oil deflectors (18) secured with the cage (14), at least one of these deflectors comprising an oil sprinkler (38) configured to project an oil jet (39) in the direction of the sun gear (7), and preferably tangentially in an annular recess (60) of the sun gear, the oil jet being oriented in the direction of rotation of the sun gear.

11. Assembly comprising a reduction gear (6) according to one of the claims 8 to 10 and an input shaft (3), this input shaft comprising a portion engaged axially in the sun gear (7) and comprising, at the outer periphery thereof, second coupling splines (3a) with the first splines (7a) of the sun gear, **characterised in that** said portion has, a staged profile in axial cross-section, and comprises at least three adjacent axial segments (70a, 70b, 70c) among which a first segment (70a) comprising a first outer centring cylindrical surface (72) having the diameter D1 and configured to cooperate with said first inner centring cylindrical surface (52), a second segment (70b) comprising a second outer centring cylindrical surface (74) having the diameter D2 and configured to cooperate with said second inner centring cylindrical surface (54), and a third segment (70c) extending axially between said first and second segments and comprising said second splines (3a) of inner diameter D4 between D1 and D2.

12. Assembly according to the preceding claim, wherein said third segment (70c) comprises pre-splines (76) situated upstream from the second splines (3a).

13. Turbine engine (1) for an aircraft, comprising a mechanical reduction gear (6) according to one of the claims 8 to 10 or an assembly according to claim 11 or 12.
